# EUROPEAN PATENT SPECIFICATION

(11) **EP 3 520 733 B1**
(45) Date of publication and mention of the grant of the patent: **11.11.2020**
(21) Application number: 17910836.0
(22) Date of filing: 12.10.2017
(51) Int. Cl.: A61C 17/20

(54) **ANTI-ROTATING STRUCTURE USED IN HANDLE OF ULTRASONIC DENTAL DESCALER**
DREHSCHUTZSTRUKTUR ZUR VERWENDUNG BEI EINEM GRIFF EINES ULTRASCHALL-DENTALENTKALKERS
STRUCTURE ANTIROTATION UTILISÉE DANS LA POIGNÉE D'UN DÉTARTREUR DENTAIRE À ULTRASONS

(30) Priority: 20.05.2017 CN 201710360002
(43) Date of publication of application: 07.08.2019
(73) Proprietor: Guilin Woodpecker Medical Instrument Co., Ltd., Guilin, Guangxi 541004 (CN)
(72) Inventor: LI, Yun, Guilin Guangxi, P. R. China 541004 (CN); QIN, Mingqun, Guilin Guangxi, P. R. China 541004 (CN); LIN, Jianhua, Guilin Guangxi, P. R. China 541004 (CN); LIANG, Lihua, Guilin Guangxi, P. R. China 541004 (CN)
(74) Representative: Sun, Yiming
(86) International application number: PCT/CN2017/105788
(87) International publication number: WO 2018/214386

(56) References cited:
- CN-A- 105 170 433
- CN-A- 105 170 433
- CN-A- 106 491 229
- CN-A- 106 491 229
- CN-A- 107 041 790
- CN-U- 202 875 519
- CN-U- 204 744 472
- CN-Y- 2 740 154
- US-A- 5 501 596
- US-A1- 2008 057 469
- US-A1- 2012 028 209

## Description

### TECHNICAL FIELD

The present invention relates to the field of dental instruments, and more particularly, to an anti-rotation structure in a handle of an ultrasonic dental scaler.

In particular the invention relates to an anti-rotation structure in a handle of an ultrasonic dental scaler, the handle comprising a handle casing and the anti-rotation structure comprising: a transducer, a rear clamping ring, and the handle casing, wherein the rear clamping ring sleeves a main rod of the transducer, and is clamped with the main rod providing a clamping fit between the rear clamping ring and the main rod, wherein the clamping fit between the rear clamping ring and the main rod is used to prevent relative rotation between the rear clamping ring and the main rod; and the handle casing sleeves the rear clamping ring, the rear clamping ring being clamped with the handle casing providing a clamping fit between the rear clamping ring and the handle casing, wherein the clamping fit between the rear clamping ring and the handle casing is used to prevent relative rotation between the rear clamping ring and the handle casing; wherein a plurality of first clamping portions is arranged on an inner wall of the rear clamping ring; a plurality of second clamping portions is arranged on a circumferential surface of the main rod; and the clamping between the rear clamping ring and the main rod is achieved through cooperation of the first clamping portions and the second clamping portions; wherein a plurality of third clamping portions is arranged on an outer wall of the rear clamping ring; a plurality of fourth clamping portions is arranged on an inner wall of the handle casing; and the clamping between the rear clamping ring and the handle casing is achieved through cooperation of the third clamping portions and the fourth clamping portions; and wherein each third clamping portion is a protrusion arranged on the outer wall of the rear clamping ring, and each fourth clamping portion is a groove formed in the inner wall of the handle casing.

### BACKGROUND

Document CN 105170433 A discloses an anti-rotation structure in a handle of an ultrasonic dental scaler as defined hereinabove.

In the handle of the ultrasonic dental scaler, it is required to arrange a clamping part on each of an ultrasonic transducer and a casing, the clamping parts being matched with each other, so as to prevent relative rotation between the transducer and the casing. This structure is called as an anti-rotation body. In the prior art, in one way, the anti-rotation body is arranged on a horn of the transducer; the horn is provided with a clamping notch; and the casing is provided with a corresponding protrusion. In another way, a waterproof silica gel layer (or the hard plastic layer) wrapping the outside of the piezoelectric ceramic is provided with the clamping part corresponding to the protrusion on the casing. However, these two ways usually result in a reduced power of the transducer because the anti-rotation portion extends beyond a work tip connected to the front.

### SUMMARY

A technical problem to be solved by the present invention is to provide an anti-rotation structure for use in a handle of an ultrasonic dental scaler, so as to overcome the above-described deficiencies in the prior art.

The technical solution of the present invention for solving the above technical problem is as follows.

In the anti-rotation structure in a handle of an ultrasonic dental scaler according to the invention the handle comprises a handle casing and the anti-rotation structure comprises: a transducer, a rear clamping ring, and the handle casing, wherein the rear clamping ring sleeves a main rod of the transducer, and is clamped with the main rod providing a clamping fit between the rear clamping ring and the main rod, wherein the clamping fit between the rear clamping ring and the main rod is used to prevent relative rotation between the rear clamping ring and the main rod; and the handle casing sleeves the rear clamping ring, the rear clamping ring being clamped with the handle casing providing a clamping fit between the rear clamping ring and the handle casing, wherein the clamping fit between the rear clamping ring and the handle casing is used to prevent relative rotation between the rear clamping ring and the handle casing; wherein a plurality of first clamping portions is arranged on an inner wall of the rear clamping ring; a plurality of second clamping portions is arranged on a circumferential surface of the main rod; and the clamping between the rear clamping ring and the main rod is achieved through cooperation of the first clamping portions and the second clamping portions; wherein a plurality of third clamping portions is arranged on an outer wall of the rear clamping ring; a plurality of fourth clamping portions is arranged on an inner wall of the handle casing; and the clamping between the rear clamping ring and the handle casing is achieved through cooperation of the third clamping portions and the fourth clamping portions; and wherein each third clamping portion is a protrusion arranged on the outer wall of the rear clamping ring, and each fourth clamping portion is a groove formed in the inner wall of the handle casing; and wherein additionally each first clamping portion is a flat surface arranged on the inner wall of the rear clamping ring, and each second clamping portion is a flat surface arranged on the circumferential surface of the main rod.

The beneficial effects of the present invention lie in the followings. After the adopted anti-rotation structure is packaged, the comfort of the handle can be effectively improved, the power is larger, and the torque transmission is more reliable.

On the basis of the above technical solution, the present invention may be further improved as follows.

Further, the number of the first clamping portions is two, and the number of the second clamping portions is two.

Further, each first clamping portion has a length of 5.8 mm and a width of 4.7 mm; and each second clamping portion has a length of 4.8 mm and a width of 3.58 mm.

Further, an included angle between each two first clamping portions arranged on the rear clamping ring is 180°, and an included angle between each two second clamping portions arranged on the main rod is 180°.

Further, the number of the third clamping portions is two, and the number of the fourth clamping portions is two.

Further, an included angle between each two third clamping portions arranged on the rear clamping ring is 180°, and an included angle between each two fourth clamping portions arranged on the handle casing is 180°.

### BRIEF DESCRIPTION OF THE DRAWINGS

Fig. 1 is a transverse cross-sectional view of an anti-rotation structure in a handle of an ultrasonic dental scaler according to the present invention;
Fig. 2 is a schematically structural view of a rear clamping ring;
Fig. 3 is a schematically structural view of a handle casing; and
Fig. 4 is a schematically structural view of a transducer.

In the drawings, the list of parts represented by reference numerals is as follows: 1. transducer, 110. main rod, 111. second clamping portion, 2. rear clamping ring, 210. first clamping portion, 220. third clamping portion, 3. handle casing, and 310. fourth clamping portion.

### DETAILED DESCRIPTION

The principles and features of the present invention are described below with reference to the accompanying drawings. The examples are intended to be illustrative only and are not intended to limit the scope of the present invention.

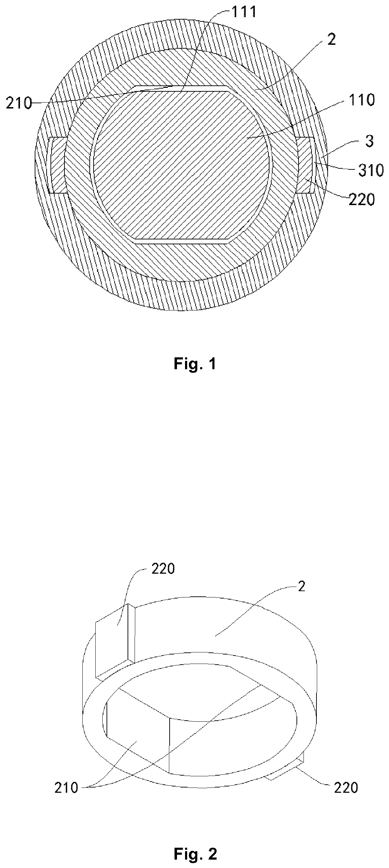

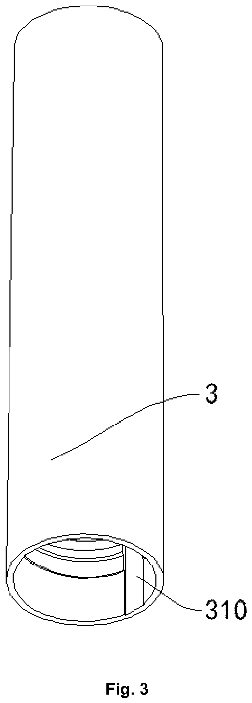

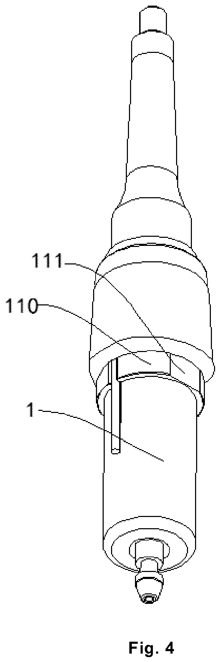

As shown in Figs. 1 to 4, an anti-rotation structure for use in a handle of an ultrasonic dental scaler includes a transducer 1, a rear clamping ring 2, and a handle casing 3. The rear clamping ring 2 sleeves a main rod 110 of the transducer 1, and is clamped with the main rod 110; and the clamping fit between the rear clamping ring 2 and the main rod 110 is used to prevent relative rotation between the rear clamping ring 2 and the main rod 110. The handle casing 3 sleeves the rear clamping ring 2; the rear clamping ring 2 is clamped with the handle casing 3; and the clamping fit between the rear clamping ring 2 and the handle casing 3 is used to prevent relative rotation between the rear clamping ring 2 and the handle casing 3.

The specific manner in which the clamping between the rear clamping ring 2 and the main rod 110 is achieved is as follows.

As shown in Figs. 1, 2 and 4, two first clamping portions 210 are arranged on an inner wall of the rear clamping ring 2, and two second clamping portions 111 are arranged on a circumferential surface of the main rod 110. An included angle between the two first clamping portions 210 arranged on the rear clamping ring 2 is 180°, and an included angle between the two second clamping portions 111 arranged on the main rod 110 is 180°. The first clamping portion 210 is a flat surface arranged on the inner wall of the rear clamping ring 2, and the second clamping portion 111 is a flat surface arranged on the circumferential surface of the main rod 110. When the rear clamping ring 2 correspondingly sleeves the main rod 110, the first clamping portion 210 is in contact with the second clamping portion 111, so that the clamping between the rear clamping ring 2 and the main rod 110 is achieved through cooperation of the first clamping portion 210 and the second clamping portion 111.

The first clamping portion 210 has a length of 5.8 mm and a width of 4.7 mm; and the second clamping portion 111 has a length of 4.8 mm and a width of 3.58 mm. A gap between the inner wall of the rear clamping ring 2 and the circumferential surface of the main rod 110 is 0.2 mm.

The specific manner in which the clamping between the rear clamping ring 2 and the handle casing 3 is achieved is as follows.

As shown in Figs. 1 to 3, two third clamping portions 220 are arranged on an outer wall of the rear clamping ring 2, and two fourth clamping portions 310 are arranged on an inner wall of the handle casing 3. An included angle between the two third clamping portions 220 arranged on the rear clamping ring 2 is 180°, and an included angle between the two fourth clamping portions 310 arranged on the handle casing 3 is 180°. The third clamping portion 220 is a protrusion arranged on the outer wall of the rear clamping ring 2; the fourth clamping portion 310 is a groove formed in the inner wall of the handle casing 3; and the clamping between the rear clamping ring 2 and the handle casing 3 is achieved through cooperation of the third clamping portions 220 and the fourth clamping portions 310.

The third clamping portion 220 has a length of 4.7 mm, a width of 3 mm and a height of 0.66 mm. The fourth clamping portion 310 has a depth of 0.2 mm and a width of 3.6 mm. A gap between the outer wall of the rear clamping ring 2 and the inner wall of the handle casing 3 is 0.08 mm.

Although the embodiments of the present invention have been illustrated and described above, it should be understood that the above-described embodiments are exemplary and are not to be construed as limiting the present invention. Those ordinary skilled in the art can make various changes, modifications, substitutions and variations to the above-described embodiments within the scope of the present invention.

## Claims

1. An anti-rotation structure in a handle of an ultrasonic dental scaler, the handle comprising a handle casing (3) and the anti-rotation structure comprising: a transducer (1), a rear clamping ring (2), and the handle casing (3), wherein the rear clamping ring (2) sleeves a main rod (110) of the transducer (1), and is clamped with the main rod (110) providing a clamping fit between the rear clamping ring (2) and the main rod (110), wherein the clamping fit between the rear clamping ring (2) and the main rod (110) is used to prevent relative rotation between the rear clamping ring (2) and the main rod (110); and the handle casing (3) sleeves the rear clamping ring (2), the rear clamping ring (2) being clamped with the handle casing (3) providing a clamping fit between the rear clamping ring (2) and the handle casing (3), wherein the clamping fit between the rear clamping ring (2) and the handle casing (3) is used to prevent relative rotation between the rear clamping ring (2) and the handle casing (3);
wherein a plurality of first clamping portions (210) is arranged on an inner wall of the rear clamping ring (2); a plurality of second clamping portions (111) is arranged on a circumferential surface of the main rod (110); and the clamping between the rear clamping ring (2) and the main rod (110) is achieved through cooperation of the first clamping portions (210) and the second clamping portions (111);
wherein a plurality of third clamping portions (220) is arranged on an outer wall of the rear clamping ring (2); a plurality of fourth clamping portions (310) is arranged on an inner wall of the handle casing (3); and the clamping between the rear clamping ring (2) and the handle casing (3) is achieved through cooperation of the third clamping portions (220) and the fourth clamping portions (310); and
wherein each third clamping portion (220) is a protrusion arranged on the outer wall of the rear clamping ring (2), and each fourth clamping portion (310) is a groove formed in the inner wall of the handle casing (3); **characterized in that**
each first clamping portion (210) is a flat surface arranged on the inner wall of the rear clamping ring (2), and each second clamping portion (111) is a flat surface arranged on the circumferential surface of the main rod (110).

2. The anti-rotation structure in the handle of the ultrasonic dental scaler according to claim 1, wherein the number of the first clamping portions (210) is two, and the number of the second clamping portions (111) is two.

3. The anti-rotation structure in the handle of the ultrasonic dental scaler according to claim 2, wherein each first clamping portion (210) has a length of 5.8 mm and a width of 4.7 mm; and each second clamping portion (111) has a length of 4.8 mm and a width of 3.58 mm.

4. The anti-rotation structure in the handle of the ultrasonic dental scaler according to claim 2, wherein an included angle between each two first clamping portions (210) arranged on the rear clamping ring (2) is 180°, and an included angle between each two second clamping portions (111) arranged on the main rod (110) is 180°.

5. The anti-rotation structure in the handle of the ultrasonic dental scaler according to claim 1, wherein the number of the third clamping portions (220) is two, and the number of the fourth clamping portions (310) is two.

6. The anti-rotation structure in the handle of the ultrasonic dental scaler according to claim 5, wherein an included angle between each two third clamping portions (220) arranged on the rear clamping ring (2) is 180°, and an included angle between each two fourth clamping portions (310) arranged on the handle casing (3) is 180°.

## Patentansprüche

1. Drehsicherungsstruktur in einem Handgriff eines Zahnsteinentferners, wobei der Handgriff ein Handgriffgehäuse (3) umfasst und die Drehsicherungsstruktur Folgendes umfasst: einen Wandler (1), einen hinteren Klemmring (2) und das Handgriffgehäuse (3), wobei der hintere Klemmring (2) einen Hauptstab (110) des Wandlers (1) umhüllt und mit dem Hauptstab (110) festgeklemmt ist, was eine Klemmpassung zwischen dem hinteren Klemmring (2) und dem Hauptstab (110) bereitstellt, wobei die Klemmpassung zwischen dem hinteren Klemmring (2) und dem Hauptstab (110) verwendet wird, um eine relative Drehung zwischen dem hinteren Klemmring (2) und dem Hauptstab (110) zu verhindern, und das Handgriffgehäuse (3) den hinteren Klemmring (2) umhüllt, wobei der hintere Klemmring (2) mit dem Handgriffgehäuse (3) festgeklemmt ist, was eine Klemmpassung zwischen dem hinteren Klemmring (2) und dem Handgriffgehäuse (3) bereitstellt, wobei die Klemmpassung zwischen dem hinteren Klemmring (2) und dem Handgriffgehäuse (3) verwendet wird, um eine relative Drehung zwischen dem hinteren Klemmring (2) und dem Handgriffgehäuse (3) zu verhindern,
wobei mehrere erste Klemmabschnitte (210) an einer inneren Wand des hinteren Klemmrings (2) angeordnet sind, mehrere zweite Klemmabschnitte (111) an einer Umfangsfläche des Hauptstabes (110) angeordnet sind und die Klemmung zwischen dem hinteren Klemmring (2) und dem Hauptstab (110) durch Zusammenwirken der ersten Klemmabschnitte (210) und der zweiten Klemmabschnitte (111) erreicht wird,
wobei mehrere dritte Klemmabschnitte (220) an einer äußeren Wand des hinteren Klemmrings (2) angeordnet sind, mehrere vierte Klemmabschnitte (310) an einer inneren Wand des Handgriffgehäuses (3) angeordnet sind und die Klemmung zwischen dem hinteren Klemmring (2) und dem Handgriffgehäuse (3) durch Zusammenwirken der dritten Klemmabschnitte (220) und der vierten Klemmabschnitte (310) erreicht wird, und
wobei jeder dritte Klemmabschnitt (220) ein Vorsprung ist, der an der äußeren Wand des hinteren Klemmrings (2) geformt ist, und jeder vierte Klemmabschnitt (310) eine Rille ist, die in der inneren Wand des Handgriffgehäuses (3) geformt ist, **dadurch gekennzeichnet, dass**
jeder erste Klemmabschnitt (210) ein ebene Fläche ist, die an der inneren Wand des hinteren Klemmrings (2) angeordnet ist, und jeder zweite Klemmabschnitt (111) eine ebene Fläche ist, die an der Umfangsfläche des Hauptstabes (110) angeordnet ist.

2. Drehsicherungsstruktur in dem Handgriff des Zahnsteinentferners nach Anspruch 1, wobei die Anzahl der ersten Klemmabschnitte (210) zwei beträgt und die Anzahl der zweiten Klemmabschnitte (111) zwei beträgt.

3. Drehsicherungsstruktur in dem Handgriff des Zahnsteinentferners nach Anspruch 2, wobei jeder erste Klemmabschnitt (210) eine Länge von 5,8 mm und eine Breite von 4,7 mm aufweist und jeder zweite Klemmabschnitt (111) eine Länge von 4,8 mm und eine Breite von 3,58 mm aufweist.

4. Drehsicherungsstruktur in dem Handgriff des Zahnsteinentferners nach Anspruch 2, wobei ein eingeschlossener Winkel zwischen jeweils zwei ersten Klemmabschnitten (210), die an dem hinteren Klemmring (2) angeordnet sind, 180° beträgt und ein eingeschlossener Winkel zwischen jeweils zwei zweiten Klemmabschnitten (111), die an dem Hauptstab (110) angeordnet sind, 180° beträgt.

5. Drehsicherungsstruktur in dem Handgriff des Zahnsteinentferners nach Anspruch 1, wobei die Anzahl der dritten Klemmabschnitte (220) zwei beträgt und die Anzahl der vierten Klemmabschnitte (310) zwei beträgt.

6. Drehsicherungsstruktur in dem Handgriff des Zahnsteinentferners nach Anspruch 5, wobei ein eingeschlossener Winkel zwischen jeweils zwei dritten Klemmabschnitten (220), die an dem hinteren Klemmring (2) angeordnet sind, 180° beträgt und ein eingeschlossener Winkel zwischen jeweils zwei vierten Klemmabschnitten (310), die an dem Handgriffgehäuse (3) angeordnet sind, 180° beträgt.

## Revendications

1. Structure anti-rotation dans une poignée d'un instrument de détartrage dentaire à ultrasons, la poignée comprenant un logement de poignée (3) et la structure anti-rotation comprenant : un transducteur (1), une bague de serrage arrière (2) et le logement de poignée (3), dans lequel la bague de serrage arrière (2) manchonne une tige principale (110) du transducteur (1), et est serrée avec la tige principale (110), fournissant un ajustement par serrage entre la bague de serrage arrière (2) et la tige principale (110), dans lequel l'ajustement par serrage entre la bague de serrage arrière (2) et la tige principale (110) est utilisé pour empêcher la rotation relative entre la bague de serrage arrière (2) et la tige principale (110) ; et le logement de poignée (3) manchonne la bague de serrage arrière (2), la bague de serrage arrière (2) étant serrée avec le logement de poignée (3), fournissant un ajustement par serrage entre la bague de serrage arrière (2) et le logement de poignée (3), dans lequel l'ajustement par serrage entre la bague de serrage arrière (2) et le logement de poignée (3) est utilisé pour empêcher la rotation relative entre la bague de serrage arrière (2) et le logement de poignée (3) ;
dans laquelle une pluralité de premières parties de serrage (210) est agencée sur une paroi intérieure de la bague de serrage arrière (2) ; une pluralité de deuxièmes parties de serrage (111) est agencée sur une surface circonférentielle de la tige principale (110) ; et le serrage entre la bague de serrage arrière (2) et la tige principale (110) est obtenu par coopération des premières parties de serrage (210) et des deuxièmes parties de serrage (111) ;
dans laquelle une pluralité de troisièmes parties de serrage (220) est agencée sur une paroi extérieure de la bague de serrage arrière (2) ; une pluralité de quatrièmes parties de serrage (310) est agencée sur une paroi intérieure du logement de poignée (3) ; et le serrage entre la bague de serrage arrière (2) et le logement de poignée (3) est obtenu par coopération des troisièmes parties de serrage (220) et des quatrièmes parties de serrage (310) ; et
dans laquelle chaque troisième partie de serrage (220) est une saillie agencée sur la paroi extérieure de la bague de serrage arrière (2), et chaque quatrième partie de serrage (310) est une rainure formée dans la paroi intérieure du logement de poignée (3) ; **caractérisé en ce que**
chaque première partie de serrage (210) est une surface plane agencée sur la paroi intérieure de la bague de serrage arrière (2), et chaque seconde partie de serrage (111) est une surface plane agencée sur la surface circonférentielle de la tige principale (110).

2. Structure anti-rotation dans la poignée de l'instrument de détartrage dentaire à ultrasons selon la revendication 1, dans laquelle le nombre des premières parties de serrage (210) est de deux, et le nombre des deuxièmes parties de serrage (111) est de deux.

3. Structure anti-rotation dans la poignée de l'instrument de détartrage dentaire à ultrasons selon la revendication 2, dans laquelle chaque première partie de serrage (210) a une longueur de 5,8 mm et une largeur de 4,7 mm ; et chaque seconde partie de serrage (111) a une longueur de 4,8 mm et une largeur de 3,58 mm.

4. Structure anti-rotation dans la poignée de l'instrument de détartrage dentaire à ultrasons selon la revendication 2, dans laquelle un angle inclus entre chaque deux premières parties de serrage (210) agencées sur la bague de serrage arrière (2) est de 180°, et un angle inclus entre chaque deux deuxièmes parties de serrage (111) agencées sur la tige principale (110) est de 180°.

5. Structure anti-rotation dans la poignée de l'instrument de détartrage dentaire à ultrasons selon la revendication 1, dans laquelle le nombre des troisièmes parties de serrage (220) est de deux, et le nombre des quatrièmes parties de serrage (310) est de deux.

6. Structure anti-rotation dans la poignée de l'instrument de détartrage dentaire à ultrasons selon la revendication 5, dans laquelle un angle inclus entre chaque deux troisièmes parties de serrage (220) agencées sur la bague de serrage arrière (2) est de 180°, et un angle inclus entre chaque deux quatrièmes parties de serrage (310) agencées sur le logement de poignée (3) est de 180°.
